# EUROPEAN PATENT APPLICATION

(11) **EP 3 547 700 A1**
(43) Date of publication of application: **02.10.2019**
(21) Application number: 18164622.5
(22) Date of filing: 28.03.2018
(51) Int. Cl.: H04N 21/482, H04N 21/422, H04N 21/433

(54) **A METHOD AND SYSTEM FOR DEFINING AND HANDLING A LIST OF PROGRAMS**

(71) Applicant: Advanced Digital Broadcast S.A., 1262 Eysins (CH)
(72) Inventor: Wielgosz, Marcin, 65-119 Zielona Gora (PL)
(74) Representative: Kancelaria Eupatent.pl Sp. z.o.o

(57) **Abstract**

A computer-implemented method for defining and handling a list of programs, the method comprising: defining a list of pinned programs upon receiving (403) commands to add (PIN) a program to the list or to remove (UNPIN) a program from the list; updating the list of pinned programs by removing (704) from the list the pinned programs that have ended; and providing a functionality of zapping through the list of pinned programs by tuning to the pinned programs in response to receiving (616) a command to change (PIN+ or PIN-) a program within the list of pinned programs.

## Description

### TECHNICAL FIELD

The present disclosure relates to a method and system for defining and handling a list of programs, in particular live television programs.

### BACKGROUND

Customer devices (such as digital television Set Top Boxes, STBs) offer several possibilities of receiving downstream data, such as video content, from various sources, such as a broadcasting distribution network (satellite, cable, terrestrial), the Internet (OTT, VOD) etc. An increasing amount of available channels, programs, OTT and VOD assets and the fact that they are being interrupted with advertisements, influence watching habits of users. Some of the popular watching habits are: traditional watching of one program - possibly randomly browsing through another programs during advertisements, watching video content on multiple devices, watching content only from recorded material, binge watching, observing a few programs simultaneously (switching between them) or zapping through the whole channel list.

In some situations a user may wish to watch several programs simultaneously and switch between them. For example, the user may wish to watch several sport events and general news (e.g. two football matches, swimming competition and a live news program), such as to watch the most attractive program at a time (for example, observe the current swimming race and switch to a football match during the break between races and switch to the live news program when nothing interesting happens in the football match and the swimming competition). This may be troublesome to handle using a conventional remote controller and content handling system at the television receiver. In case the user watches two programs only, they can be switched in between by using a dedicated BACK button on some remote control units. However, this may be more troublesome if there are several programs of interest and the programs are broadcast on channels which are arranged distant from each other on a channel list. In such a case, the typical BACK button functionality does not allow switching between more than two programs and the user is forced to memorise the channel numbers (which are often a three or more digit numbers) of the selected channels in order to switch to them. Moreover, the users may change their habits from day to day, therefore another day the user may wish to watch a different set of channels, having different channel numbers. In such a case, each time the user must learn the new channel numbers to be watched.

Therefore, there is a need to provide a method for defining and handling a list of programs, which would provide an easy and convenient way of zapping through selected programs.

### SUMMARY

There is disclosed a computer-implemented method for defining and handling a list of programs, the method comprising: defining a list of pinned programs upon receiving commands to add a program to the list or to remove (UNPIN) a program from the list; updating the list of pinned programs by removing from the list the pinned programs that have ended; providing a functionality of zapping through the list of pinned programs by tuning to the pinned programs in response to receiving a command to change (PIN+ or PIN-) a program within the list of pinned programs.

The method may comprise, upon detecting the command to add a selected program to the list of pinned programs: creating the list of pinned programs or adding the selected program to the existing list of pinned programs; obtaining a recording start time of the selected pinned program; obtaining a recording end time of the selected pinned program; recording the selected pinned program.

The method may comprise, upon detecting the command to remove (UNPIN) a selected program from the list of pinned programs: stopping the recording of the selected pinned program; removing the selected pinned program from the list of pinned programs.

The method may further comprise, after tuning to the pinned program, handling pause, rewind or forward operation requests with respect to the recording of the pinned program.

The method may further comprise removing the pinned program from the list of pinned programs after the recording of the pinned program is finished.

The method may further comprise removing from memory a watched recording of the pinned program.

There is also disclosed a computer program comprising program code means for performing all the steps of the computer-implemented method as well as a computer readable medium storing computer-executable instructions performing all the steps of the computer-implemented method as described herein.

There is also disclosed a system for defining and handling a list of programs in a content receiver, the system comprising: a content receiving block for providing content of a plurality of programs; a controller configured to perform the steps of the method as disclosed herein.

The system may further comprise a remote control unit with a dedicated section of buttons comprising: a PIN button configured to invoke the command to add a program to the list of pinned programs; an UNPIN button configured to invoke the command to remove a program from the list of pinned programs; a PIN+ button configured to change to a next program within the list of pinned programs; and a PIN-button configured to change to a previous program within the list of pinned programs.

### BRIEF DESCRIPTION OF DRAWINGS

The method presented herein is presented by means of example embodiments on a drawing, wherein:
Fig. 1 presents a structure of a Set Top Box (STB);
Fig. 2 presents data stored in a memory 140 of the STB;
Fig. 3 presents a remote control unit 300;
Fig. 4 presents a flow chart of a main process;
Fig. 5 presents a flow chart of a pin assistant process 404;
Figs. 6A-6B present a flow chart of a playback process 406 of pinned programs.
Figs. 7A-7B present a flow chart of a process for handling already watched or recorded pinned programs.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

In the present disclosure, the term "video content" is to be understood more broadly as multimedia content comprising video data and associated audio data and associated additional data (such as content description, etc.). The term "video content" is used to distinguish the content from other content types, such as still images or raw data (e.g. files).

### DETAILED DESCRIPTION

The system and method will be presented below with reference to an embodiment related to a television Set Top Box (STB). However, it may be implemented in an equivalent manner to other content receiving devices, such as personal computers, portable devices, smartphones, etc.

The term "program" as used herein may refer to any type of a content item, such as a television programming event, an event stored at a local memory (e.g. HDD) of the user device, a video on demand item, etc.

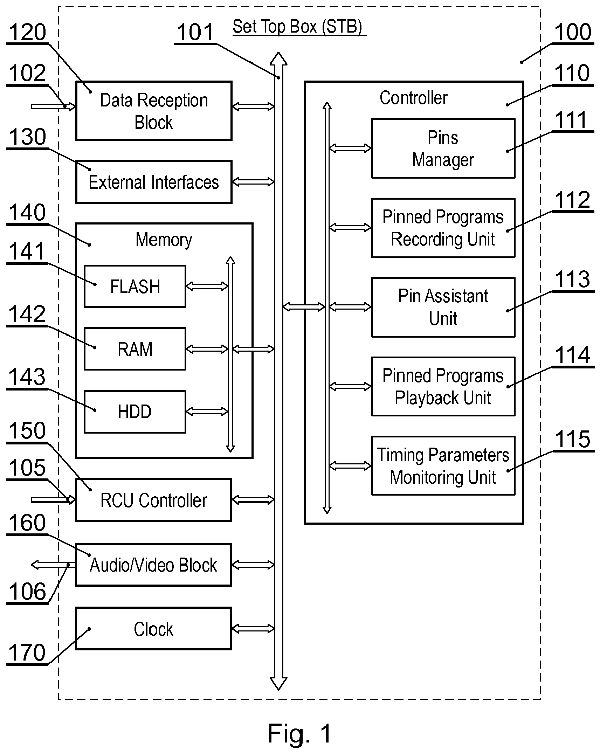

Fig. 1 presents an example of a structure of a Set Top Box (STB).

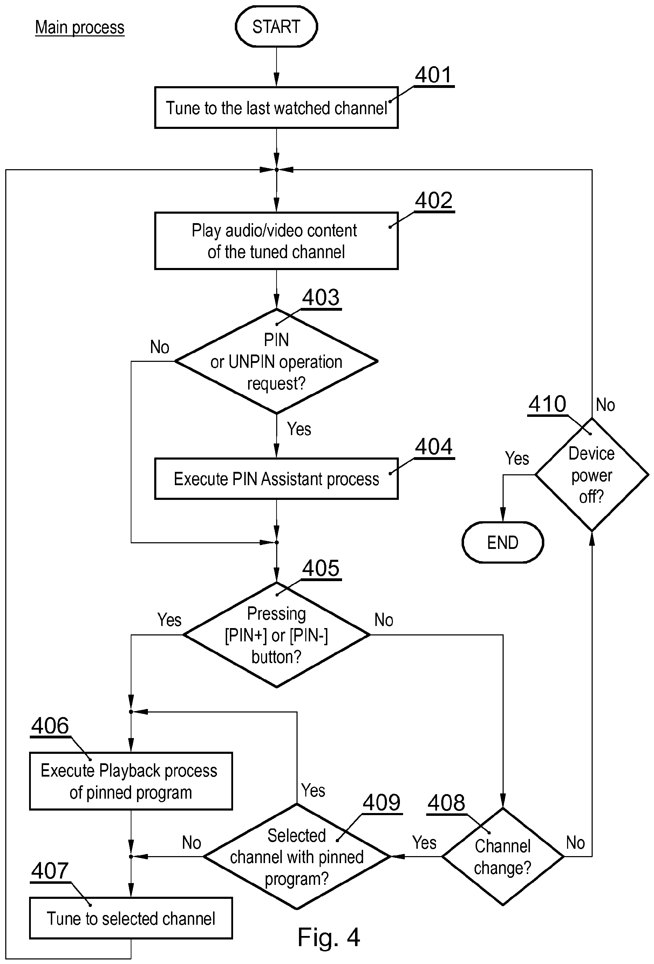

A controller 110 comprises a plurality of units configured to provide the functionality of the system as described herein in accordance with the method of Figs. 4-7B.

A pins manager 111 is responsible for executing a main process of the device as presented in Fig. 4.

A pinned programs recording unit 112 is responsible for recording content of pinned programs.

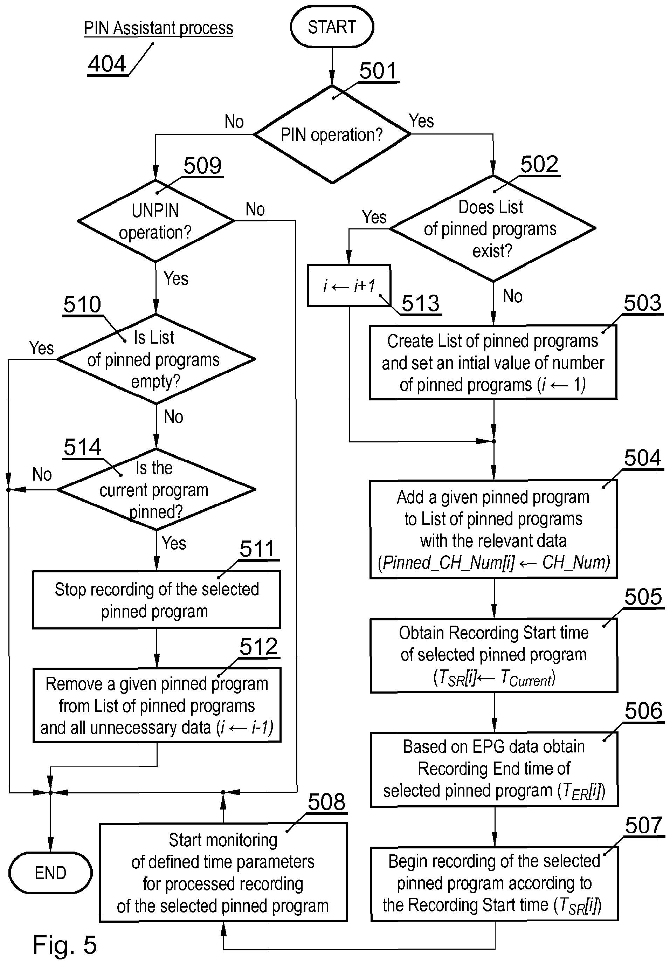

A pin assistant unit 113 is responsible for executing a pin assistant process 404 which is presented in Fig. 5.

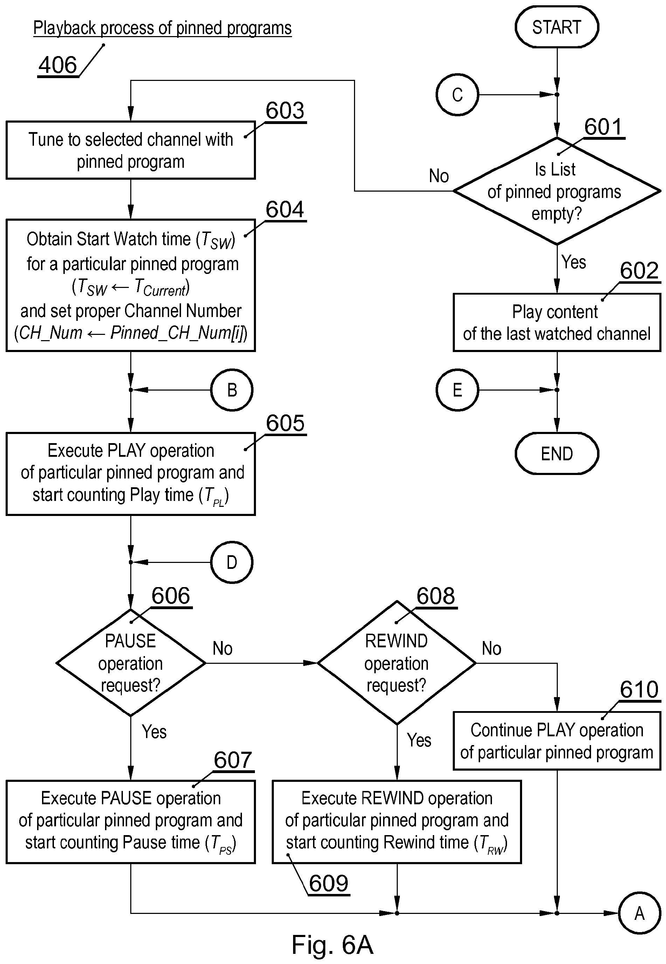

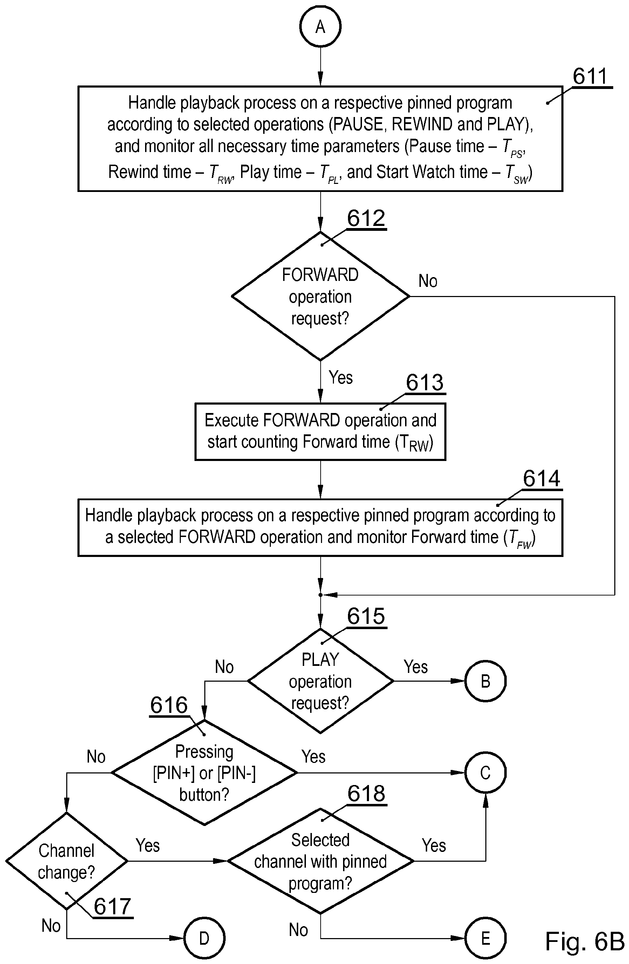

A pinned programs playback unit 114 is responsible for executing a playback process of the pinned programs 406 which is presented in Figs. 6A-6B.

A timing parameters monitoring unit 115 is responsible for providing necessary time information for other controller units, for example it is responsible for providing information concerning start/stop time of recording, start/stop time of watching of the pinned programs.

The STB 100 operates utilizing memory blocks 140, including RAM 142, Flash 141 blocks and a hard disk drive (HDD) 143 or another type of mass storage that can be used to store video or other data locally at the STB, but is not essential for its operation.

A clock module 170 is configured to provide timing data necessary for cooperation of the device units.

A data reception block 120 is configured to receive downstream data 102, such as video content, from the broadcasting distribution network. The data reception block 120 (also called a front-end block) may comprise a plurality of tuners (such as satellite, cable, terrestrial or IPTV tuners), wherein one of the tuners receives content to be displayed at the television screen to which the STB is directly connected (e.g. the STB 100 connected to a TV set) and another tuner receives content to be recorded at the HDD 143.

External interfaces 130, such as the Ethernet interface, are configured to communicate, via at least one transmission channel, with the Ethernet (IP) network or the wireless network, in order to receive applications and/or content recommendation data, as well as to transmit user or STB statistic data.

The STB is operable by the user via a remote control unit (RCU) that communicates, typically via an infrared (IR) receiver receiving an IR signal 105, with a RCU controller block 150.

An audio/video block 160 is an example of a content presentation block and is configured to decode the received content, convert it to an audio/video format suitable for presentation to the user, and transmit the converted content via a transmission channel 106 to the TV set to which the STB is directly connected.

All modules of the STB communicate with each other via one or more internal data buses 101.

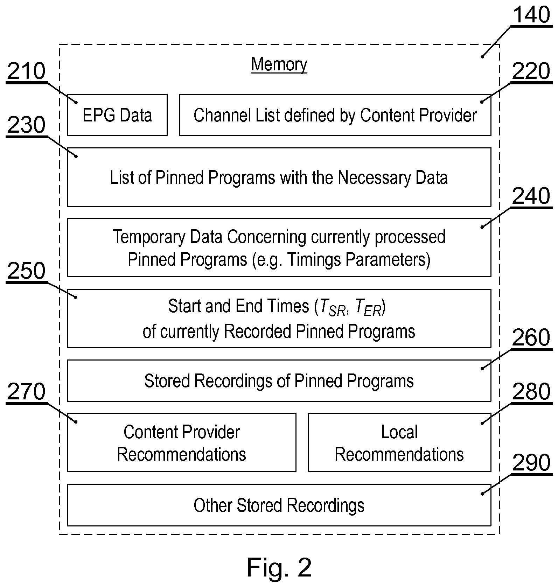

Fig. 2 presents data stored in a memory 140 of the STB. Data is stored in containers, such as tables or other data types.

A data set comprises a particular configuration, specifying a plurality of parameter types defined in data containers 210-290. That configuration can be changed by the user of the device or remotely by a system operator.

An EPG (Electronic Program Guide) data set 210 comprises additional data about content available from various sources (such as content delivery network or other content providers).

A channel list defined by content provider data set 220 comprises a list of currently available channels, such as television channels.

A list of pinned programs 230 data set comprises a list of programs pinned by a user together with additional data associated with each program.

A temporary data concerning currently processed pinned programs 240 data set comprises other timing parameters, for example the amount of time the user watched current program, or parameters related to time-shift functionality such as rewind time, forward time, play time, pause time etc.

Start and end times (T_{SR}, T_{ER}) of currently recorded pinned programs are stored in a data set 250.

A stored recordings of pinned programs 260 data set comprises recordings of the programs pined by the user.

A content provider recommendations 270 data set comprises information concerning programs recommended by the content provider.

A local recommendations 280 data set comprises information concerning program recommendation based on current location of the user and current content provider, as well as recommendations resulting from the user behavior. For example, if the STB is used by a plurality of users, each having a separately accessible user account (with separately tracked watched content or separate access to content over special channels such as VOD), then each user may receive different content recommendations (e.g. related to the favorite type of content for that particular user, for example VOD content recommendations related to user's favorite television series).

Other stored recordings are stored in a separate data set 290.

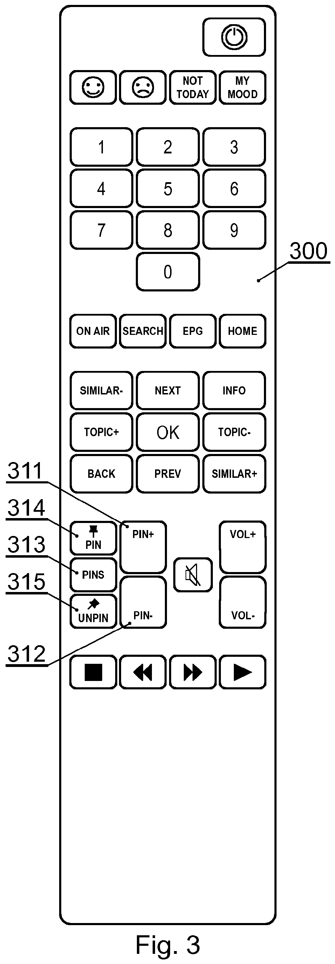

Fig. 3 presents a remote control unit 300 with a dedicated section of buttons 311-315 for the functionality as described herein. The PIN button 314 allows to add a selected program (such as the currently watched program or a program selected on an EPG or other content list) to a list of pinned programs. The list of pinned programs is supposed to be defined by the user to contain selected programs of current interest for the user, such that the user may conveniently zap through these programs, without the need to enter the channel numbers individually for each program.

The PINS button 313 allows to open the list of pinned programs, to show it to the user, for example if the user would like to check the contents or to conveniently remove programs from the list that has become too long.

The UNPIN button 315 allows to remove from the list of pinned programs the currently selected program (i.e. the currently watched program, a program selected on an EPG or other list).

The PIN+ button 311 and PIN- button 312 allow zapping (navigating) through the pinned programs according to the list of pinned programs.

Fig. 4 presents a flow chart of a main process. In a first step 401, typically upon powering on, the STB is tuned to the last watched channel. Next, in step 402 an audio/video content of the tuned channel is played. Next, in step 403 it is checked if a PIN or UNPIN request was input by the user. If not, the process jumps to step 405. Otherwise, if the PIN or UNPIN request has been made, in step 404 the pin assistant process is executed to define the list of pinned programs, by adding (in response to the PIN request) a selected program to the list or removing (in response to the UNPIN request) a selected program from the list. Next, in step 405 it is checked if a PIN+ or PIN- button was pressed by the user. If so, then in step 406 a playback process of the selected pinned program is executed. And next, in step 407 the process tunes to the channel corresponding to the program and the procedure jumps to step 402. If in step 405 the PIN+ or PIN- is not detected, then in step 408 it is checked if the channel was changed by means of standard CH+ or CH- buttons (next/previous channel). If so, then in step 409 it is checked if the selected channel program is on the list of pinned programs. If so, then in step 406 the playback process of the pinned program is executed. If not, then in step 407 the selected channel is tuned, and the procedure jumps to step 402. If in step 408 the channel is not changed, then the procedure moves to step 410 in which it is checked if the power off request for the device was received. If so, then the procedure terminates, otherwise the procedure jumps to step 402.

Fig. 5 presents a flow chart of the pin assistant process 404. In a first step 501 it is checked if a PIN operation was requested. If so, then in step 502 it is checked if a list of pinned programs exists. If not, then in step 503 the list of pinned programs is created and an initial value of the number of pinned programs is set to 1 (i := 1). Next, in step 504, a selected program is added to the list of pinned programs together with its relevant data, such as for example channel number (Pinned_CH_Num[i] := CH_Num). The pinned program remains on the list either until it ends or until it is unpinned by the user. If in step 502 the list of pinned programs already exists, then in step 513 the value of the number of pinned programs is increased by 1 (i := i +1). Next the procedure jumps directly to step 504. Next, in step 505 a recording start time of the selected pinned program is obtained and stored (T_{SR}[i] := T_{Current}). Next, in step 506, recording end time (T_{ER}[i]) of the selected pinned program is obtained basing on the EPG data. Next, in step 507 the recording of the selected pinned program, according to the recording start time (T_{SR}[i]), is started. Next, in step 508 monitoring of defined time parameters, such as the end time of the program for processed recording of the selected pinned program is started after which the procedure terminates.

If in step 501 the PIN operation was not detected, then in step 509 it is checked if the UNPIN operation was requested. If not, the procedure terminates. Otherwise, in step 510 it is checked if the list of pinned programs is empty. If so, then the procedure terminates. Otherwise, if the list is not empty, in step 514 it is checked if the current program is pinned. If not, the procedure terminates. Otherwise, in step 511 the recording of the selected pinned program is stopped and in step 512 the selected pinned program and all its corresponding data are removed from the list of pinned programs (i := i-1) and the procedure terminates.

Figs. 6A-6B present a flow chart of the playback process 406 of the pinned programs. First, in step 601 it is checked if the list of the pinned programs is empty. If so, then in step 602 a content of the last watched channel is played and the process terminates. Otherwise, if in step 601 the list of pinned programs is not empty, then in step 603 the selected channel with the pinned program is tuned. Next, in step 604 the start watch time (T_{SW}) for a particular pinned program (T_{SW} := T_{Current}) is obtained and a corresponding channel number (CH_Num := Pinned_CH_Num[i]) is set. Next, in step 605 a play operation of particular pinned program is executed and counting of the play time (T_{PL}) is started. Next, in step 606 it is checked if a PAUSE command was requested. If so, then in step 607 the PAUSE operation of particular pinned program is executed and counting of pause time (T_{PS}) is started. Next, the process continues to step 611 which is described later. If in step 606 the PAUSE operation is not requested, then in step 608 it is checked if a REWIND command was requested. If so, then in step 609 the REWIND operation of particular pinned program is executed and counting of the rewind time (T_{RW}) is started. Next, the procedure continues to step 611. If in step 608 the rewind operation was not requested, then in step 610 the PLAY operation of particular pinned program is continued and the procedure moves to step 611, in which playback process on the respective pinned program according to selected operations (PAUSE, REWIND and PLAY) is handled, and all necessary time parameters (Pause time - T_{PS}, Rewind time - T_{RW}, Play time - T_{PL}, and Start Watch time - T_{SW}) are monitored. Next, in step 612 it is checked if a FORWARD command was requested. If so, then in step 613 the FORWARD operation is executed and counting of the forward time (T_{FW}) is started. Next, in step 614 the playback process on a respective pinned program according to a selected FORWARD operation is handled and the forward time (T_{FW}) is monitored. Next, in step 615 it is checked if a PLAY command was requested. If so, then the procedure jumps to step 605. Otherwise, it continues to step 616 in which it is checked if the PIN+ or PIN- button was pressed. If so, the procedure jumps to step 601. Otherwise, it continues to step 617, in which it is checked if the channel was changed by means of standard CH+ or CH- buttons. If not, the procedure jumps to step 606. Otherwise, it continues to step 618, in which it is checked if the selected channel has a pinned program. If not, the procedure terminates, otherwise the procedure jumps to step 601. If in step 612 the FORWARD command was not requested, then the procedure jumps directly to step 615.

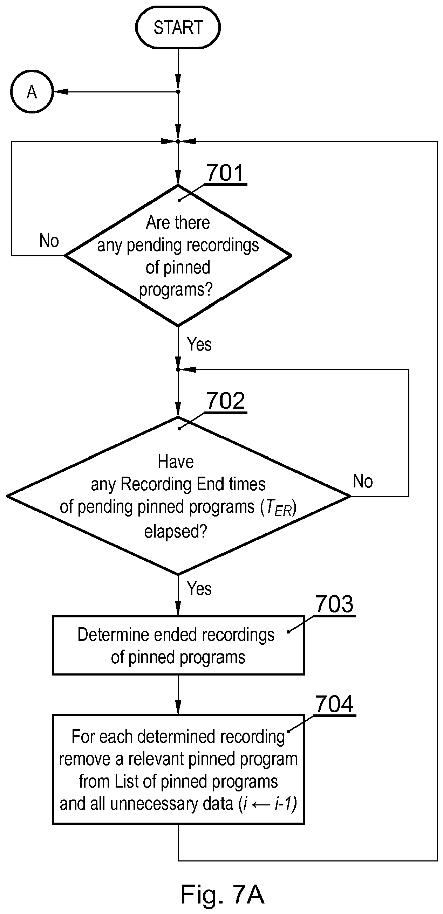

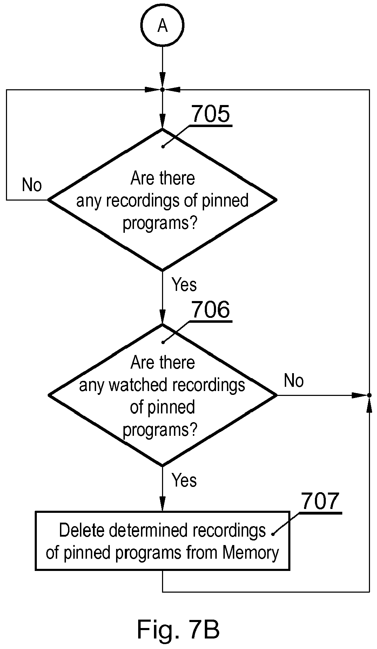

Figs 7A-7B present a flow chart of a process for handling already watched or recorded pinned programs. This process may operate in parallel with the other processes. Based on the monitored data, step 508 of Fig. 5 results in taking corresponding actions related to the recordings of the pinned programs. The process comprises two parallel threads. In the first thread, in step 701 it is checked if there are any pending recordings of the pinned programs. If not, the procedure loops back to the beginning, otherwise it continues to step 702 in which it is checked if any recording end times of pending pinned programs (T_{ER}) have elapsed. If not, the procedure loops back to step 702, otherwise it continues to step 703, in which ended recordings of the pinned programs are determined. Next, in step 704, for each determined recording a relevant pinned program is removed from the list of pinned programs together with corresponding unnecessary data (i := i-1) and the procedure loops back to step 701.

In the second thread of the process in step 705, it is checked if there are any recordings of the pinned programs. If not the procedure loops back to the beginning, otherwise it continues to step 706 in which it is checked if there are watched recordings of the pinned programs. If not the procedure loops back to the beginning, otherwise it continues to step 707 in which determined recordings of the pinned programs are deleted from the memory and the procedure loops back to the first step 705.

In another embodiment, instead of recording some or all pinned programs, the method may just monitor the ending times of pinned programs and in case it is detected that the pinned program has ended, it may be removed from the list of pinned programs. In that case, the functionality is limited to allowing the user to zap through the list of pinned programs, wherein the list is automatically updated so as to prevent the user from being switched to a program that is out of interest.

The described method allows the possibility of defining a personalized list of pinned programs that are currently of most interest to the user, within which the user can navigate with dedicated buttons available on the RCU. The user may modify (define) the list by his own, but also the list is automatically updated by removing the programs which are no longer available, e.g. are terminated (such as to avoid a situation of switching to a channel corresponding to the pinned program at a time when that program is no longer broadcast on that channel). The method facilitates fast and convenient navigating within selected programs of interest as well as recording and playback the content of the live (available) pinned programs.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for defining and handling a list of programs may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A computer-implemented method for defining and handling a list of programs, the method comprising:
- defining a list of pinned programs upon receiving (403) commands to add (PIN) a program to the list or to remove (UNPIN) a program from the list;
- updating the list of pinned programs by removing (704) from the list the pinned programs that have ended; and
- providing a functionality of zapping through the list of pinned programs by tuning to the pinned programs in response to receiving (616) a command to change (PIN+ or PIN-) a program within the list of pinned programs.

2. The method according to claim 1, comprising, upon detecting the command to add (PIN) a selected program to the list of pinned programs:
- creating the list of pinned programs (503) or adding the selected program (504) to the existing list of pinned programs;
- obtaining a recording start time (505) of the selected pinned program;
- obtaining a recording end time (506) of the selected pinned program; and
- recording the selected pinned program (507).

3. The method according to claim 2, comprising, upon detecting the command to remove (UNPIN) a selected program from the list of pinned programs:
- stopping the recording (511) of the selected pinned program; and
- removing the selected pinned program (512) from the list of pinned programs.

4. The method according to any of claims 2 or 3, further comprising, after tuning to the pinned program, handling pause, rewind or forward operation requests (606, 608, 612) with respect to the recording of the pinned program.

5. The method according to any of claims 2-4, further comprising removing the pinned program from the list of pinned programs after the recording of the pinned program is finished.

6. The method according to any of claims 2-5, further comprising removing (707) from memory a watched recording of the pinned program.

7. A computer program comprising program code means for performing all the steps of the computer-implemented method according to any of claims 1-6 when said program is run on a computer.

8. A computer readable medium storing computer-executable instructions performing all the steps of the computer-implemented method according to any of claims 1-6 when executed on a computer.

9. A system for defining and handling a list of programs in a content receiver (100), the system comprising:
- a content receiving block (160) for providing content of a plurality of programs;
- a controller (110) configured to perform the steps of the method according to any of claims 1 to 6.

10. The system according to claim 9, further comprising a remote control unit (300) with a dedicated section of buttons (311-315) comprising:
- a PIN button (314) configured to invoke the command to add a program to the list of pinned programs;
- an UNPIN button (315) configured to invoke the command to remove a program from the list of pinned programs;
- a PIN+ button (311) configured to change to a next program within the list of pinned programs; and
- a PIN- button (312) configured to change to a previous program within the list of pinned programs.
